(19) Europäisches Patentamt
European Patent Office
Office européen des brevets

(11) **EP 2 596 863 A1**

(12) **EUROPEAN PATENT APPLICATION**
published in accordance with Art. 153(4) EPC

(43) Date of publication:
**29.05.2013 Bulletin 2013/22**

(21) Application number: **10855007.0**

(22) Date of filing: **21.07.2010**

(51) Int Cl.:
**B01J 23/89** (2006.01)　　**B01J 33/00** (2006.01)
**B01J 35/08** (2006.01)　　**H01M 4/88** (2006.01)
**H01M 4/90** (2006.01)

(86) International application number:
**PCT/JP2010/062263**

(87) International publication number:
**WO 2012/011170 (26.01.2012 Gazette 2012/04)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(71) Applicant: **TOYOTA JIDOSHA KABUSHIKI
KAISHA
Toyota-shi,
Aichi-ken, 471-8571 (JP)**

(72) Inventors:
• **ARAI, Tatsuya
Toyota-shi
Aichi 471-8571 (JP)**
• **TAKEHIRO, Naoki
Toyota-shi
Aichi 471-8571 (JP)**

• **SEKIZAWA, Koshi
Toyota-shi
Aichi 471-8571 (JP)**
• **KIMURA, Hiroko
Toyota-shi
Aichi 471-8571 (JP)**
• **IIO, Atsuo
Toyota-shi
Aichi 471-8571 (JP)**

(74) Representative: **Duckworth, Timothy John
J A Kemp
14 South Square
Gray's Inn
London WC1R 5JJ (GB)**

(54) **FINE CATALYST PARTICLES AND METHOD FOR PRODUCING FINE CATALYST PARTICLES**

(57) Disclosed is a catalyst particle having high catalyst activity and a method for producing the catalyst particle.

A catalyst particle comprising a core particle which contains a palladium alloy and an outermost layer which contains platinum, wherein an interlayer comprising only palladium as a simple substance is present between the core particle and the outermost layer.

FIG.1

## Description

## Technical Field

The present invention relates to a catalyst particle having high catalyst activity, and a method for producing the same.

## Background Art

A fuel cell converts chemical energy directly to electrical energy by supplying a fuel and an oxidant to two electrically-connected electrodes and causing electrochemical oxidation of the fuel. Unlike thermal power generation, fuel cells are not limited by Carnot cycle, so that they can show high energy conversion efficiency. In general, a fuel cell is formed by stacking a plurality of single fuel cells each of which has a membrane electrode assembly as a fundamental structure, in which an electrolyte membrane is sandwiched between a pair of electrodes.

Conventionally, supported platinum and platinum alloy materials have been employed as an electrocatalyst in the anode and cathode of a fuel cell. However, platinum in an amount that is required for the latest electrocatalytic technology is still expensive to achieve commercial mass production of fuel cells. Therefore, the research of decreasing the amount of platinum contained in the cathode and anode of the fuel cell has been advancing by using platinum in combination with less expensive metals.

In the fuel cell, a decrease in voltage attributed to overvoltage is one of major causes of decreasing output. Examples of the overvoltage include activation overvoltage derived from an electrode reaction, resistance overvoltage derived from the resistance on an electrode surface or the resistance of the fuel cell, and concentration overvoltage derived from concentration distribution of the reactant on the electrode surface. The electrocatalyst exerts the effect of decreasing activation overvoltage among the above-mentioned overvoltages.

Platinum and a platinum alloy are preferably used as the electrocatalyst in the cathode and anode of the fuel cell because the platinum has high catalytic performance. However, slow reaction rate of oxygen reduction in the cathode using the conventional platinum catalyst and high platinum cost cause a significant barrier to the commercialization of fuel cells. As the catalyst for solving such a problem, a particle composite containing palladium or a palladium alloy covered with an atomic thin layer of a platinum atom is disclosed in Patent Literature 1.

## Citation List

[Patent Literature]

[Patent Literature 1] US Patent Publication No. 2007/31722

## Summary of Invention

Technical Problem

Paragraph 236 and the following paragraphs of Patent Literature 1 disclose a method for forming a monatomic layer of platinum on the surface of a palladium particle by copper underpotential deposition (hereinafter, referred to as Cu-UPD).

The Cu-UPD has such a unique problem that part of a core particle is exposed on the surface of a catalyst particle because the covering with the outermost layer such as platinum is insufficient, resulting in a decrease in the catalyst activity of the catalyst particle. One of major causes of the above problem is considered as follows: since a lattice constant of metallic materials which form the core particle is significantly smaller than that of the metallic materials which form the outermost layer, metallic atoms which form the outermost layer become unstable on the surface of the core particle; that is, lattice mismatch occurs on the same. For example, the experimental result shows that in the case of the catalyst particle comprising the core particle which contains a palladium-copper alloy and the outermost layer which contains platinum, the covering with the outermost layer containing platinum is insufficient in the region where copper is present in a high ratio on the surface of the core particle. Patent Literature 1 discloses no solution to such a unique problem of the catalyst particle which is covered with the atomic thin layer.

The present invention has been made in view of the above circumstances, and it is an object of the present invention to provide a catalyst particle having high catalyst activity and a method for producing the catalyst particle.

Solution to Problem

The catalyst particle of the present invention is a catalyst particle comprising a core particle which contains a palladium alloy and an outermost layer which contains platinum, wherein an interlayer comprising only palladium as a simple substance is present between the core particle and the outermost layer.

In the catalyst particle of the present invention, the interlayer is preferably a layer substantially having no concavoconvexes except on a portion that is present on an edge part of the core particle.

In the catalyst particle of the present invention, the palladium alloy is preferably an alloy containing palladium and a metallic material having a lower standard electrode potential than that of palladium.

In the catalyst particle of the present invention, the palladium alloy is preferably an alloy containing palladium and a metallic material selected from the group consisting of copper, cobalt, iron, nickel, silver and manganese.

In the catalyst particle of the present invention, the interlayer preferably has a thickness of 0.2 to 1.4 nm.

The catalyst particle of the present invention may be supported by a carrier.

The method for producing the catalyst particle of the present invention is a method for producing a catalyst particle comprising a core particle which contains a palladium alloy and an outermost layer which contains platinum, the method comprising the steps of:

preparing a palladium alloy particle;
forming an interlayer comprising only palladium as a simple substance on a surface of the palladium alloy particle;
forming a monatomic layer on a surface of the interlayer; and
replacing the monatomic layer with the outermost layer containing platinum.

In the method for producing the catalyst particle of the present invention, the palladium alloy particle is preferably an alloy particle containing palladium and a metallic material having a lower standard electrode potential than that of palladium.

In the method for producing the catalyst particle of the present invention, the palladium alloy particle is preferably an alloy particle containing palladium and a metallic material selected from the group consisting of copper, cobalt, iron, nickel, silver and manganese.

In the method for producing the catalyst particle of the present invention, the step of forming the interlayer may be a step of electrochemically depositing an interlayer comprising only palladium as a simple substance on the surface of the palladium alloy particle.

In the method for producing the catalyst particle of the present invention, the step of forming the interlayer may be a step of selectively eluting metals other than palladium among metals exposed on at least the surface of the palladium alloy particle.

In the method for producing the catalyst particle of the present invention, the interlayer forming step may comprise the steps of:

selectively eluting metals other than palladium among metals exposed on at least the surface of the palladium alloy particle;
and electrochemically depositing the interlayer comprising only palladium as the simple substance on at least a part of the surface of the palladium alloy particle, where the metals other than palladium have been selectively eluted.

In the method for producing the catalyst particle of the present invention, the palladium alloy particle may be supported by a carrier.

**Advantageous Effects of Invention**

According to the present invention, the lattice constant of the interlayer comprising only the palladium as the simple substance is closer to that of platinum than that of the palladium alloy. Therefore, platinum in the outermost layer can be more stably present.

In addition, the catalyst particle of the present invention can be produced by the production method of the present invention. Furthermore, by forming the interlayer comprising only palladium as the simple substance on the surface of the palladium alloy particle in the production method of the present invention, the outermost layer containing platinum can cover the core particle at a high coverage.

**Brief Description of Drawings**

FIG. 1 is a schematical view showing a change in a catalyst particle surface in each step of the production method of the present invention.

FIG. 2 is part of a cyclic voltammogram showing electrochemical measuring results of the catalyst particles in Example 1, Comparative Example 1 and Comparative Example 2.

FIG. 3 is a schematic perspective view showing a truncated octahedral palladium particle or palladium alloy particle.

FIG. 4 is a schematic sectional view of an example of a device for Cu-UPD.

**Description of Embodiments**

1. Catalyst particle

The catalyst particle of the present invention is a catalyst particle comprising a core particle which contains a palladium alloy and an outermost layer which contains platinum, wherein an interlayer comprising only palladium as a simple substance is present between the core particle and the outermost layer.

As described above, the catalyst particle of the present invention has a structure wherein the core particle containing the palladium alloy is covered with the interlayer comprising only palladium as the simple substance, and the resultant particle is further covered with the outermost layer containing platinum.

The lattice constant (3.89 Å) of the interlayer comprising only palladium as the simple substance is closer to that (3.92 Å) of platinum than that of the palladium alloy. Therefore, in the catalyst particle of the present invention, platinum atoms contained in the outermost layer can be more stably present.

As will be described in Examples, the catalyst particle (Comparative Example 1), in which the core particle containing a palladium-copper alloy is directly covered with platinum, exhibits only about three times the activity of the conventional carbon-supported platinum catalyst (Comparative Example 2). The reason is considered as follows: due to a large difference between the lattice constant of the palladium-copper alloy and that of the platinum, the lattice mismatch occurs at the interface between the core particle and a platinum layer; therefore, platinum is precipitated in an uneven distribution such that while the platinum layer is partially thicker than one atomic layer, a core particle is not partially covered with the platinum layer.

To the contrary, as will be described in Examples, the catalyst particle (Example 1), in which the core particle containing the palladium-copper alloy is covered with the interlayer comprising only palladium as the simple substance, and the resultant particle is further covered with platinum, exhibits twelve times the activity of the conventional carbon-supported platinum catalyst (Comparative Example 2).

The palladium interlayer has a function of preventing the contamination of fuel cell materials due to the elution of the palladium alloy in addition to the function of stabilizing the covering with platinum.

The catalyst particle of the present invention comprises the outermost layer having a thickness of only a few atomic layers, so that the core particle being a substrate is likely to be exposed. For example, in the case where the core particle is a palladium alloy particle which contains palladium and a 3d transition metal element such as copper, cobalt or iron, durability and performance of the catalyst particle are drastically decreased when the core particle is eluted. Especially, it is proved that an iron ion facilitates a Fenton reaction even at a concentration of ppm order to deteriorate an electrolyte membrane and an ionomer in the fuel cell. The palladium interlayer has a function of preventing the elution of the above 3d transition metal elements.

The interlayer comprising only palladium as the simple substance is preferably a layer substantially having no concavoconvexes except on a portion that is present on an edge part of the core particle.

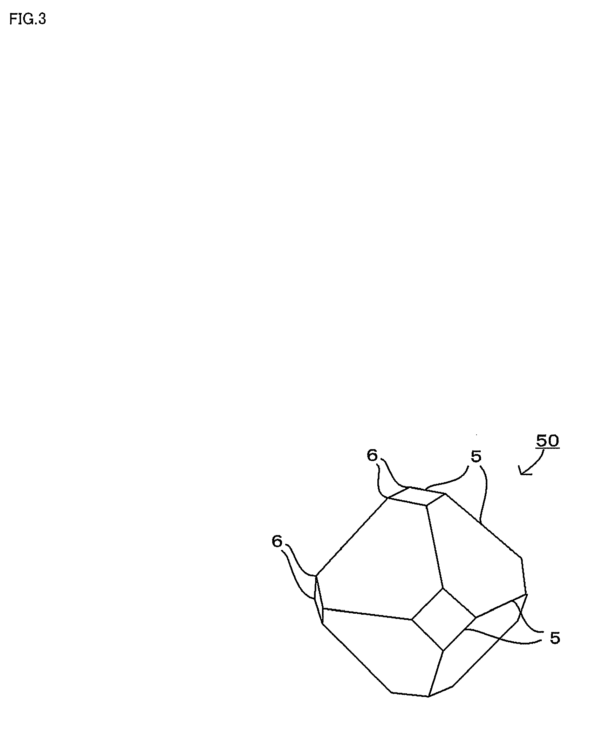

Herein, the portion that is present on the edge part of the core particle in the interlayer means a portion that covers the edge part of the core particle in the interlayer. FIG. 3 is a schematic perspective view showing a truncated octahedral palladium particle or palladium alloy particle. The palladium particle and palladium alloy particle generally form truncated octahedron 50 comprising a plurality of atoms. The edge part of the core particle includes sides 5 and vertexes 6 of truncated octahedron 50.

The state of substantially having no concavoconvexes refers to the state in which almost all the interlayer except the portion that is present on the edge part on the core particle surface are smooth, or the state in which only negligibly-fine concavoconvexes are present in the interlayer.

It is possible to confirm from various kinds of methods whether or not the interlayer has a smooth surface except the portion that is present on the edge part of the core particle. For example, in the case where several parts on the interlayer are observed by means of a TEM, and no concavoconvexes is observed on the whole observed parts, it can be determined that the interlayer is smooth.

An another example of the method for determining whether the interlayer is smooth or not includes a method comprising the steps of: letting CO absorb on the metallic particle surface; measuring the amount of absorbed CO to evaluate the surface area; and comparing thus-obtained evaluation result with the geometric area calculated as having no concavoconvexes.

The palladium alloy used in the present invention is preferably an alloy containing palladium and a metallic material having a lower standard electrode potential than that of palladium.

In particular, the palladium alloy is preferably an alloy containing palladium and a metallic material selected from the group consisting of copper, cobalt, iron, nickel, silver and manganese.

The outermost layer of the catalyst particle of the present invention may contain a very small amount of an element other than platinum. In particular, with the premise that a total mass of the outermost layer is 100% by mass, the outermost layer preferably contains 3% by mass or less of the element other than platinum, more preferably contains 1% by mass or less of the element other than platinum, and still more preferably contains only platinum as a simple substance.

Depending on the thickness of the outermost layer, in the case where the outermost layer is, for example, a monatomic layer of platinum, the interlayer preferably has a thickness of six or less atomic layers from the viewpoint of cost, and preferably has a thickness of four or less atomic layers from the viewpoint of catalyst activity. Considering that the atoms which form the interlayer are palladium atoms, the interlayer preferably has a thickness of 0.2 to 1.4 nm. If the platinum layer is thicker than the monatomic layer, it is preferable to decrease the thickness of the interlayer from the viewpoint of the cost and activity.

From the point of view that it is possible to inhibit the elution of the core particle further in an electrochemical reaction, a coverage of the outermost layer on the core particle is preferably from 0.8 to 1, with the premise that the coverage is 1 when the surface of the core particle is completely covered with the outermost layer.

If the coverage of the outermost layer on the core particle is less than 0.8, the core particle is eluted in the electrochemical reaction, so that there is a possibility that the catalyst particle deteriorates. The coverage of the outermost layer on the core particle is preferably from 0.9 to 1, more preferably from 0.97 to 1.

"Coverage of the outermost layer on the core particle" means a ratio of the area of the core particle which is covered with the outermost layer, with the premise that the total surface area of the core particle is 1. As the method for calculating the coverage, for example, there may be mentioned a method comprising the steps of observing several sites on the surface of the catalyst particle by means of a TEM and calculating the ratio of the area of the core particle, which is confirmed by the observation to be covered with the outermost layer, to the whole observed area.

Also, it is possible to calculate the coverage of the outermost layer on the core particle by investigating components that are present on the outermost surface of the catalyst particle by X-ray photoelectron spectroscopy (XPS) or time of flight secondary ion mass spectrometry (TOF-SIMS), etc.

In the catalyst particle of the present invention, the outermost layer is preferably a monatomic layer comprising only platinum. Such a particle is advantageous in that the catalytic performance is extremely high, and the material cost is low because the covering amount of platinum is minimum, compared with a catalyst having an outermost layer comprising two or more atomic layers.

The average particle diameter of the catalyst particle of the present invention is preferably from 2 to 20 nm, more preferably from 4 to 10 nm. Since the outermost layer of the catalyst particle is preferably a monatomic layer as described above, the outermost layer preferably has a thickness of 0.17 to 0.23 nm. Therefore, the thickness of the outermost layer is negligible relative to the average particle diameter of the catalyst particle, and it is preferable that the average particle diameter of the core particle is almost equal to that of the catalyst particle.

The average particle diameter of the particle in the present invention is calculated by the conventional method. An example of the method of calculating the average particle diameter of the particle is as follows. Firstly, the particle diameter of one particle is calculated in a TEM (transmission electron microscope) image at a magnification of 400,000 or 1, 000, 000 when the particle is regarded as a spherical particle. Such a calculation of the average particle diameter by the TEM observation is performed on the same kinds of 200 to 400 particles to define the average of these particles as the average particle diameter.

The catalyst particle of the present invention may be supported by a carrier. Particularly when the catalyst particle is used for the catalyst layer of a fuel cell, the carrier is preferably an electroconductive material from the viewpoint of imparting electroconductivity to the catalyst layer.

Specific examples of the electroconductive material which can be used as the carrier include: electroconductive carbon materials including carbon particles such as Ketjen black (product name; manufactured by: Ketjen Black International Company), VULCAN (product name; manufactured by: Cabot Corporation), Norit (product name; manufactured by: Norit Nederland BV), BLACK PEARLS (product name; manufactured by: Cabot Corporation) and Acetylene Black (product name; manufactured by: Chevron Corporation), and carbon fibers.

2. Method for producing catalyst particle

The method for producing the catalyst particle of the present invention is a method for producing a catalyst particle comprising a core particle which contains a palladium alloy and an outermost layer which contains platinum, the method comprising the steps of:

preparing a palladium alloy particle;
forming an interlayer comprising only palladium as a simple substance on a surface of the palladium alloy particle;
forming a monatomic layer on a surface of the interlayer; and
replacing the monatomic layer with the outermost layer containing platinum.

In the catalyst particle having a metallic coating formed on the core particle, it is effective to use a metal having a lower standard electrode potential than that of metallic coating as the core particle for improving activity and reducing cost. However, in the catalyst particle using the core particle containing the so-called poor metal as described above, if the lattice constant on the core particle surface is 5 to 10% or more smaller than that of the metallic coating, the metallic coating cannot sufficiently cover the core particle. Therefore, there is a problem that durability and performance of the catalyst particle decrease.
The purpose of the production method of the present invention is to form an interlayer comprising only palladium as a simple substance on the surface of the core particle containing a palladium alloy without forming concavoconvexes, the palladium has the lattice constant close to that of platinum contained in the outermost layer. Thereby, the present invention can provide a catalyst particle excellent in durability and performance even in the case of using the core particle containing the palladium alloy, which is a poorer metal than platinum.
The production method of the present invention comprises the steps of (1) preparing the palladium alloy particle, (2) forming the interlayer, (3) forming the monatomic layer on the surface of the interlayer, and (4) replacing the monatomic layer with the outermost layer containing platinum. The production method is not necessarily limited to the four steps only, and in addition to the four steps, the method can comprise a filtration/washing step, a drying step, a pulverization step, etc., which will be described below.
Hereinafter, the above steps (1) to (4), and other steps will be described in order.

2-1. Step of preparing palladium alloy particle

The palladium alloy particle prepared in this step may be a commercially-available particle, or a particle produced using materials containing palladium and other metallic materials as raw materials. In addition, a particle produced appropriately using the commercially available palladium alloy particle can be used in the present invention.
The average particle diameter of the palladium alloy particle is not particularly limited.
The palladium alloy particle is preferably an alloy particle containing palladium and a metallic material having a lower standard electrode potential than that of palladium. In particular, the palladium alloy particle is preferably an alloy particle containing the metallic material listed above in the description of the core particle.
The palladium alloy particle can be supported by a carrier. Specific examples of the carrier are the same as the above listed description.

2-2. Step of forming interlayer

This is a step of forming an interlayer comprising only palladium as a simple substance on a surface of the palladium alloy particle.
The interlayer formed in this step may be a layer comprising palladium atoms derived from the palladium alloy particle, or a layer comprising palladium atoms derived from palladium materials other than the palladium alloy particle. Also, the interlayer may be a layer containing both the palladium atoms derived from the palladium alloy particle and the palladium atoms derived from the palladium materials other than the palladium alloy particle.
In this step, a specific method is not particularly limited as long as the above-described interlayer can be formed on the surface of the palladium alloy particle.
In this step, there can be employed, for example, a method for electrochemically depositing the interlayer comprising only palladium as the simple substance on the surface of the palladium alloy particle, a method for selectively eluting metals other than palladium among metals exposed on at least the surface of the palladium alloy particle, etc. In addition, there may be employed a method obtained by using the above-mentioned two methods in combination, the method comprising the steps of: selectively eluting metals other than palladium among metals exposed on at least the surface of the palladium alloy particle; and electrochemically depositing the interlayer comprising only palladium as the simple substance on at least a part of the surface of the palladium alloy particle, where the metals other than palladium have been selectively eluted.
Hereinafter, this step will be divided into two steps of: selectively eluting the metals other than palladium among the metals exposed on at least the surface of the palladium alloy particle; and electrochemically depositing the interlayer comprising only palladium as the simple substance, and will be described in detail.

2-2-1. Step of selectively eluting metals other than palladium

This is a step of selectively eluting metals other than palladium among metals exposed on at least the surface of the palladium alloy particle.
In this step, to selectively elute the metals other than palladium, it is ideal that only the metals other than palladium are completely eluted without eluting any palladium. However, the purpose of this step is to completely remove the metals other than palladium exposed on the surface of the palladium alloy particle. Therefore, actually the metals other than palladium may be completely eluted even if a very small amount of palladium is eluted.

In this step, specific examples of the method for eluting the metals exposed on the surface of the palladium alloy particle include a method for applying a potential to the palladium alloy particle, a method for performing an acid treatment on the palladium alloy particle, etc., but not necessarily limited thereto. Among the above described methods, in the method for performing the acid treatment, it is possible to selectively elute the metals other than palladium by adjusting pH and temperature.

Hereinafter, there will be specifically described an example of selectively eluting copper from the surface of a palladium-copper particle supported by a carbon carrier (hereinafter, referred as to PdCu/C).
First, PdCu/C is immersed in a saturated electrolyte solution of a palladium ion. Next, the potential at which palladium is unlikely to be dissolved and copper is likely to be dissolved is applied to the whole electrolyte solution. The standard electrode potential of copper is 0.337 V, and the standard electrode potential of palladium is 0.915 V. Therefore, as the potential at which palladium is unlikely to be dissolved and copper is likely to be dissolved, the potential in the range from 0.8 to 1.2 V is preferably selected.

In the case of selectively eluting copper from the surface of PdCu/C by the method for performing the acid treatment, PdCu/C may be immersed in strong acid. Herein, pH in which copper is ionized to be eluted is 4 or less, and pH in which palladium is ionized to be eluted is 1.5 or less. Therefore, a preferable condition that palladium is unlikely to be dissolved and copper is likely to be dissolved is washing with strong acid in which pH is adjusted to 3 to 4.
In addition, by appropriately setting the temperature, the selectivity of the metals eluted can be improved. The ease of elution varies depending on the particle diameter of PdCu/C. For example, if the particle diameter of PdCu/C is a preferred particle diameter of 6 nm, the eluted amount of palladium under the condition of a temperature of 80°C is about six times of that under the condition of a room temperature of 15 to 25°C. Therefore, in the case of selectively eluting copper from the surface of PdCu/C, it is suitable for eluting copper using the acid in which pH is adjusted to 3 to 4 without raising the temperature, preferably with cooling.

In this step, the metals other than palladium are selectively eluted from at least the surface of the palladium alloy particle. Thereby, the surface of the palladium alloy particle comprises only a single layer of palladium. The lattice constant (3.89 Å) of palladium is close to that (3.92 Å) of platinum, so that the palladium alloy particle can be sufficiently covered with platinum in the step of covering the outermost layer containing platinum, which will be described hereinafter.
Especially in the case of using the method for applying the potential to the palladium alloy particle, the method can be performed in a palladium saturated solution. Therefore, there is an advantage that the elution of palladium can be minimized, and noble metals can be efficiently utilized.

2-2-2. Step of electrochemically depositing interlayer comprising only palladium as simple substance

This is a step that follows the above described elution step and is a step of electrochemically depositing the interlayer comprising only palladium as the simple substance on at least a part of the surface of the palladium alloy particle, where the metals other than palladium have been selectively eluted.

In the step of eluting the metals other than palladium, as a result of eluting the metallic atoms other than palladium atoms from the surface of the palladium alloy particle, the surface of the palladium alloy particle has concavoconvexes. Therefore, if the outermost layer covers the surface of the palladium alloy particle as it is, the concavoconvexes are left on the surface of thus-obtained catalyst particle. Especially convex portions are more likely to be eluted compared with other portions, therefore, durability of the catalyst particle could decrease.
Accordingly, in this step, by forming the interlayer comprising only palladium as the simple substance on the surface of the palladium alloy particle, the catalyst particle which has no concavoconvexes on the surface thereof and excellent durability can be produced.

Hereinafter, there will be specifically described a method for electrochemically depositing the interlayer comprising only palladium as the simple substance on PdCu/C from which surface copper has been selectively eluted.
First, PdCu/C is immersed in the saturated electrolyte solution of a palladium ion. Next, the potential at which the palladium is likely to be precipitated is applied to the whole electrolyte solution. The standard electrode potential of the palladium is 0.915 V, so that the palladium is precipitated at 0.915 V or less. As the potential at which the palladium is likely to be precipitated, it is preferable to select the potential in the rage from 0.8 to 1.2 V.
When the palladium is precipitated, it is preferentially precipitated in the concave portions of the palladium alloy particle.

This reason is as follows: it is more surface-energetically stable that palladium is precipitated so as to bury the concave portions of the palladium alloy particle, than the case where palladium is precipitated in the convex portions of the same. Accordingly, a smooth single layer of palladium is formed on the surface of the core particle through the above step.

2-3. Step of forming monatomic layer on interlayer surface, and step of replacing the monatomic layer with outermost layer containing platinum

A specific example of this step includes a method for preliminarily forming a monatomic layer on a surface of an interlayer by underpotential deposition, and then replacing the monatomic layer with an outermost layer containing platinum. As the underpotential deposition, Cu-UPD is preferably used.

Hereinafter, a specific example of Cu-UPD will be described.

First, powder of palladium-copper particle on which surface is covered with the interlayer comprising only palladium, which is supported by a carbon carrier, (hereinafter referred to as Pd/PdCu/C) is dispersed in water and filtered to obtain a Pd/PdCu/C paste, and the paste is applied onto a working electrode of an electrochemical cell. The Pd/PdCu/C paste may adhere onto the working electrode by using the electrolyte such as Nafion (product name) as a binder. For the working electrode, a platinum mesh or glassy carbon can be used.

Next, a copper solution is added to the electrochemical cell. In the copper solution, the working electrode, a reference electrode and a counter electrode are immersed, and a monatomic layer of copper is precipitated on the surface of the Pd/PdCu/C by Cu-UPD.

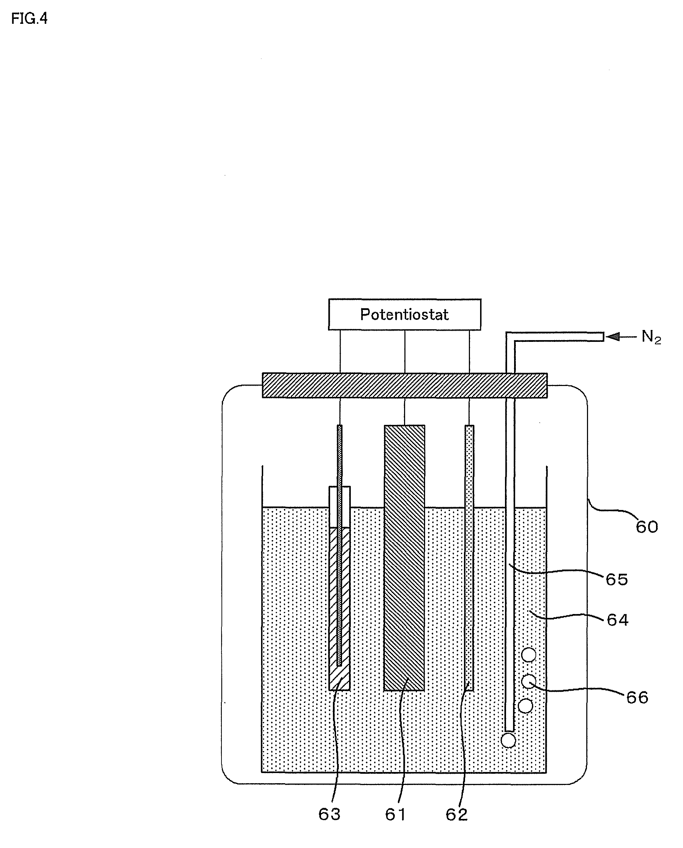

As shown in FIG. 4, a device for Cu-UPD is broadly divided into cell 60 which houses a copper solution and electrodes, and a potentiostat which controls voltage and current. In cell 60, working electrode 61 to which the Pd/PdCu/C paste is applied or adheres, counter electrode 62 and reference electrode 63 are disposed so that they can be sufficiently immersed in copper solution 64, and the above three electrodes are electrically connected to the potentiostat. In addition, nitrogen inlet 65 is disposed so as to be immersed in copper solution 64, and nitrogen is bubbled in copper solution 64 for a predetermined period of time from a nitrogen source (not shown in figures) installed outside the cell to make the copper solution be into the saturated state with nitrogen. Circles 66 represent bubbles of nitrogen.

An example of the specific condition of Cu-UPD is as follows:

· Copper solution: Mixed solution of 0.05 mol/L of $CuSO_4$ and 0.05mol/L of $H_2SO_4$ (nitrogen is subjected to bubbling)
· Atmosphere: under nitrogen atmosphere
· Sweep rate: 0.2 to 0.01 mV/second
· Potential: After the potential is swept from 0.8 V (vsRHE) to 0.4 V (vsRHE), it is clamped at about 0.4 V (vsRHE).
· Voltage clamp time: 1 second to 10 minutes

After the above voltage clamp time is passed, the working electrode is promptly immersed in a platinum solution to replace copper with platinum by displacement plating, utilizing the difference in ionization tendency. The displacement plating is preferably performed under an inert gas atmosphere such as a nitrogen atmosphere. The platinum solution is not particularly limited. For example, a platinum solution obtained by dissolving $K_2PtCl_4$ in 0.1 mol/L of $HClO_4$ can be used. The platinum solution is sufficiently agitated to bubble nitrogen therein. The length of the displacement plating time is preferably 90 minutes or more.

The catalyst particle of the present invention can be obtained through the above step, in which the surface of the palladium alloy particle is smooth, and the particle is completely covered with the platinum layer.

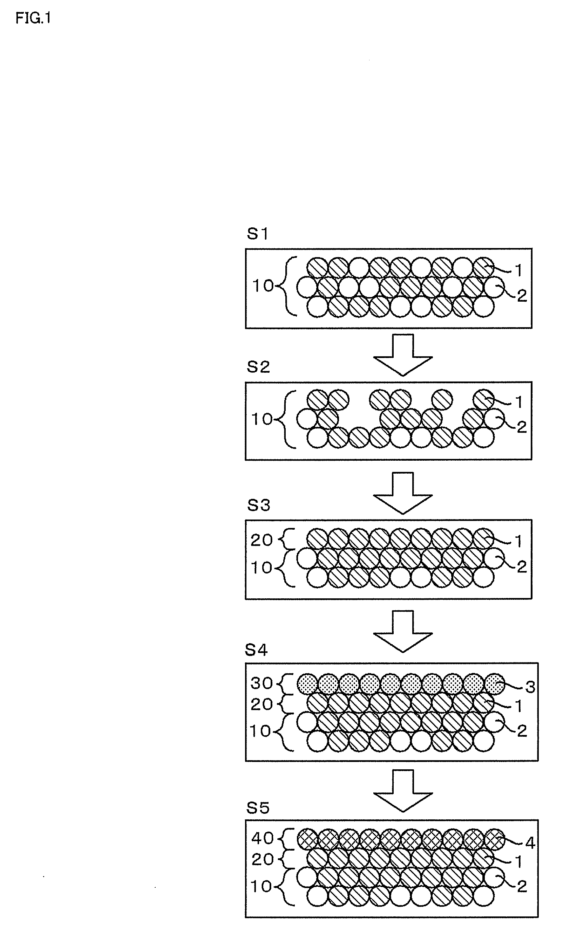

Hereinafter, the above-described production method of the present invention will be summarized with reference to FIG. 1. FIG.1 is a schematical view showing a change in the catalyst particle surface in each step of the production method of the present invention. White arrows drawn between rectangles S1 to S5 represent that the covering state is changed from S1 to S5. In the rectangles S1 to S5, part of a palladium alloy particle, an interlayer and an outermost layer containing platinum are represented by circles which form 3 or 4 lines. Each of these circles represents a metallic atom. Among these circles, circles on the lower side are closer to the center of the palladium alloy particle, and circles on the upper side are closer to the outermost layer containing platinum. Circles having the same pattern represent atoms having the same element.

First, the palladium alloy particle is prepared (S1). On surface 10 of the palladium alloy particle, both palladium atoms 1 and metallic atoms 2 other than palladium are present.

Next, among metals exposed on at least the surface of the palladium alloy particle, metals other than palladium are selectively eluted (S2). In this step, metallic atoms 2 other than palladium are removed from at least the surface of the palladium alloy particle. However, the surface of the palladium particle in the above state has many concavoconvexes, so that a lot of fine convex portions are generated. Thereby, palladium could be easily eluted.

Accordingly, in the subsequent step, an interlayer comprising only palladium as a simple substance is electrochemically deposited (S3). As a result of preferentially depositing the palladium on the concave portions, the interlayer 20 comprising only palladium as the simple substance is formed on surface 10 of the palladium alloy particle.

Next, monatomic layer 30 is formed on the surface of interlayer 20 (S4). A specific example of the monatomic layer includes a copper atomic layer comprising copper atoms 3 formed by Cu-UPD.

Finally, monatomic layer 30 is replaced with outermost layer 40 containing platinum atoms 4, thus, the catalyst particle of the present invention is completed (S5).

As described above, by providing the palladium interlayer, platinum in the outermost layer can be more stably present. Thereby, the core particle can be completely covered with platinum in the outermost layer, so that durability and performance of the catalyst particle can be improved. In addition, the surface of the catalyst particle has no concavoconvexes, thus, durability is improved. That is, improvement in durability of the catalyst particle means that the palladium alloy particle is more unlikely to be dissolved. Also, improvement in performance of the catalyst particle means that Oxygen Reduction Reaction (ORR) activity of the catalyst particle is improved.

2-4. Other steps

After forming the outermost layer containing platinum, there may be performed filtration/washing, drying and pulverization of the catalyst particle.

The filtration/washing of the catalyst particle is not particularly limited as long as it is a method that can remove impurities without damage to the layer structure of the particle produced. An example of the filtration/washing includes a method for performing suction and filtration using pure water as a solvent, a filter paper (manufactured by: Whatman; #42), etc. to separate.

The drying of the catalyst particle is not particularly limited as long as it is a method that can remove a solvent, etc. An example of the drying is drying for 10 to 12 hours with a vacuum drier in the condition of a temperature of 60 to 100°C.

The pulverizing of the catalyst particle is not particularly limited as long as it is a method that can pulverize solid contents. Examples of the pulverization include pulverization using a mortar, etc., and mechanical milling using a ball mill, a turbo mill, mechanofusion, a disk mill, etc.

**Examples**

Hereinafter, the present invention will be described further in detail with reference to examples and comparative examples. The scope of the present invention is not limited to the following examples.

1. Production of catalyst particle

[Example 1]

First, a palladium-copper alloy supported by a carbon carrier was prepared. Next, the palladium-copper alloy supported by the carbon carrier, Nafion (product name) which is a kind of electrolyte, and an aqueous solution of ethanol were mixed to prepare a palladium-copper alloy paste supported by the carbon carrier. Then, a device shown in FIG. 4 was prepared. As working electrode 61 in a cell, a glassy carbon electrode on which the paste was applied was used. Also in the cell, 0.1 mol/L of a $HClO_4$ solution was added instead of copper solution 64.

First, the potential cycling was applied thereto for 40 times at a sweep rate of 1 mV/sec under nitrogen or argon atmosphere in the potential range of 0.05 V to 1.2 V (vs RHE). Thereby, copper on the surface of the palladium-copper alloy particle on the working electrode was dissolved.

Next, 0.1 mol/L of the $HClO_4$ solution was replaced with 0.5 mol/L of sulfuric acid solution which is saturated by palladium. After the potential was swept from 0.8 V (vs RHE) to 0.5 V at a sweep rate of 0.1 mV/sec under nitrogen or argon atmosphere, it was clamped at about 0.5 V (vs RHE). Thereby, palladium was precipitated on the surface of the palladium-copper alloy particle on the working electrode to form an interlayer comprising only palladium.

Then, 0.5 mol/L of sulfuric acid solution which is satureated by palladium was replaced with a mixed solution of 0. 05 mol/L of $CuSO_4$ and 0.05 mol/L of $H_2SO_4$. After the potential was swept from 0.8 V (vs RHE) to 0.4 V at a sweep rate of 0.1 mV/sec under nitrogen or argon atmosphere, it was clamped at about 0.4 V (vs RHE). Thereby, a copper monatomic layer was precipitated on the surface of the interlayer comprising only palladium.

Finally, the working electrode was removed from the cell and immersed in a saturated solution of a platinum (II) ion for 5 minutes under nitrogen or argon atmosphere. Thereby, the copper monatomic layer was replaced with a platinum monatomic layer to complete the catalyst particle of Example 1.

[Comparative Example 1]

First, a palladium-copper alloy supported by a carbon carrier was prepared. Next, the palladium-copper alloy supported by the carbon carrier, Nafion (product name) which is a kind of electrolyte, and an aqueous solution of ethanol were mixed to prepare a palladium-copper alloy paste supported by the carbon carrier. Then, a device shown in FIG. 4 was prepared. As working electrode 61 in a cell, a glassy carbon electrode on which the paste was applied was used. Also in the cell, a mixed solution of 0.05 mol/L of $CuSO_4$ and 0.05 mol/L of $H_2SO_4$ was added. After the potential was swept from 0.8 V (vs RHE) to 0.4 V at a sweep rate of 0.1 mV/sec under nitrogen or argon atmosphere, it was clamped at about 0.4 V (vs RHE). Thereby, a copper monatomic layer was precipitated on the surface of the palladium-copper alloy particle.

Finally, the working electrode was removed from the cell and immersed in a saturated solution of a platinum (II) ion for 5 minutes under nitrogen or argon atmosphere. Thereby, the copper monatomic layer was replaced with a platinum monatomic layer to complete the catalyst particle of Comparative Example 1.

[Comparative Example 2]

A commercially-available electrocatalyst for solid polymer fuel cell (product name: TEC10E50E; manufactured by: Tanaka Kikinzoku Kogyo K.K.) was used as the catalyst particle of Comparative Example 2.

2. Evaluation of catalyst particle

Each of the catalyst particles obtained in Example 1 and Comparative Examples 1 and 2 was subjected to an electrochemical measurement by the following methods to calculate the mass activity of platinum.

First, the catalyst particle obtained in Example 1, Comparative Examples 1 or 2, Nafion (product name) which is a kind of the electrolyte and an aqueous solution of ethanol were mixed to prepare a paste. Next, a device shown in FIG. 4 was prepared. As working electrode 61 in a cell, a glassy carbon electrode on which the paste was applied was used. Also in the cell, 0.1 mol/L of a $HClO_4$ solution was added instead of copper solution 64.

The electrochemical measurement was performed under the following conditions (i) and (ii).

(i) The potential was swept from 1.05 V (vs RHE) to 0.1 V (vs RHE) at a sweep rate of 10 mV/sec under oxygen atmosphere.
(ii) After the potential reached at 0.1 V (vs RHE), the potential was swept to 1.05 V (vs RHE) at a sweep rate of 10 mV/sec.

In the condition (ii), if the current value of 0. 9 V (vs RHE) is defined as A(A), the current value (limiting current) of 0.1 to 0.2 V (vs RHE) is defined as B(A), and the platinum mass on the glassy carbon electrode is defined as D(g), the mass activity of platinum C (A/g-Pt) can be represented by the following formula (1):

$$\text{Formula (1): } C = \{(A \times B)/(B-A)\}/D$$

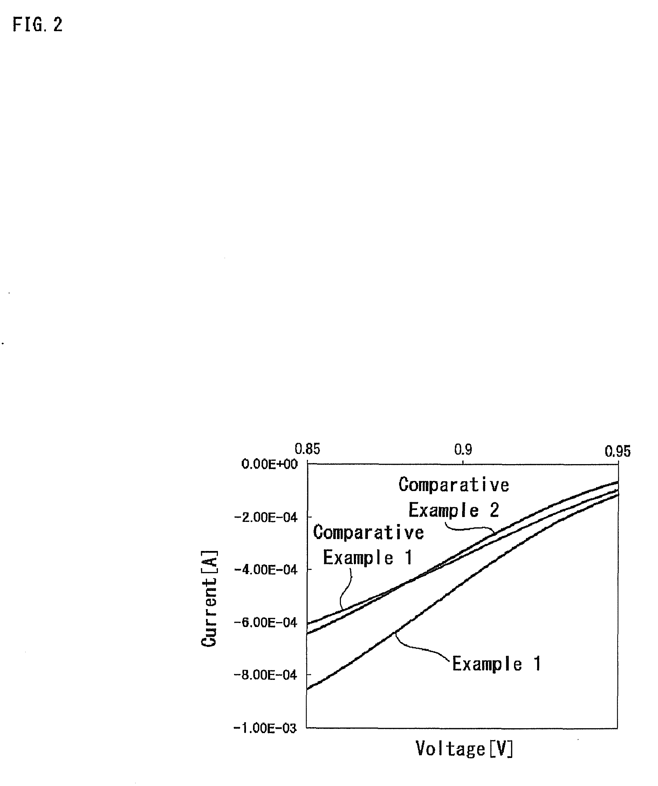

FIG. 2 is part of a cyclic voltammogram showing electrochemical measuring results of the catalyst particles obtained in Example 1, Comparative Examples 1 and 2. The following table 1 is a table which lists the mass activity of platinum of the catalyst particles obtained in Example 1 and Comparative Examples 1 and 2.
[Table 1]

|  | Mass activity of platinum (A/g-Pt) |
| --- | --- |
| Example 1 | 2750 |
| Comparative Example 1 | 670 |
| Comparative Example 2 | 210 |

The results in Table 1 show that the mass activity of platinum of the catalyst particle of Comparative Example 1 was three times higher than that of Comparative Example 2. The reason is considered as follows: the catalyst particle of Comparative Example 1 has the palladium particle as the core particle; therefore, compared to the conventional platinum-supported carbon, only a lower-mass platinum is used for the catalyst particle, resulting in a high platinum activity per unit mass. Also, the other reason is considered that the specific activity of platinum in the outermost layer is improved by the interaction of platinum and palladium.

Furthermore, the results in Table 1 show that the mass activity of platinum of the catalyst particle of Example 1 was four times higher than that of the catalyst particle of Comparative Example 1. This result shows that the activity further increases due to the presence of the interlayer comprising only palladium as the simple substance. The reason is considered as follows: the interlayer contributes to the improvement in the coverage of the platinum outermost layer on the core particle; therefore, electrochemical surface area (ECSA) is improved, resulting in an increase in the active site of the surface of the catalyst particle.

**Reference Signs List**

| | |
|---|---|
| 1: | Palladium atom |
| 2: | Metallic atom other than palladium |
| 3: | Copper atom |
| 4: | Platinum atom |
| 5: | Side of truncated octahedron |
| 6: | Vertex of truncated octahedron |
| 10: | Surface of palladium alloy particle |
| 20: | Interlayer comprising only palladium as a simple substance |
| 30: | Monatomic layer |
| 40: | Outermost layer |
| 50: | Truncated octahedron |
| 60: | CV cell |
| 61: | Working electrode |
| 62: | Counter electrode |
| 63: | Reference electrode |
| 64: | Copper solution |
| 65: | Nitrogen inlet |
| 66: | Bubble of nitrogen |

**Claims**

1. A catalyst particle comprising a core particle which contains a palladium alloy and an outermost layer which contains platinum,
   wherein an interlayer comprising only palladium as a simple substance is present between the core particle and the outermost layer.

2. The catalyst particle according to claim 1, wherein the interlayer is a layer substantially having no concavoconvexes except on a portion that is present on an edge part of the core particle.

3. The catalyst particle according to claim 1 or 2, wherein the palladium alloy is an alloy containing palladium and a metallic material having a lower standard electrode potential than that of palladium.

4. The catalyst particle according to claim 1 or 2, wherein the palladium alloy is an alloy containing palladium and a metallic material selected from the group consisting of copper, cobalt, iron, nickel, silver and manganese.

5. The catalyst particle according to any one of claims 1 to 4, wherein the interlayer has a thickness of 0.2 to 1.4 nm.

6. The catalyst particle according to any one of claims 1 to 5, being supported by a carrier.

7. A method for producing a catalyst particle comprising a core particle which contains a palladium alloy and an outermost layer which contains platinum, the method comprising the steps of:

   preparing a palladium alloy particle;
   forming an interlayer comprising only palladium as a simple substance on a surface of the palladium alloy particle;

forming a monatomic layer on a surface of the interlayer; and
replacing the monatomic layer with the outermost layer containing platinum.

8. The method for producing the catalyst particle according to claim 7, wherein the palladium alloy particle is an alloy particle containing palladium and a metallic material having a lower standard electrode potential than that of palladium.

9. The method for producing the catalyst particle according to claim 7, wherein the palladium alloy particle is an alloy particle containing palladium and a metallic material selected from the group consisting of copper, cobalt, iron, nickel, silver and manganese.

10. The method for producing the catalyst particle according to any one of claims 7 to 9, wherein the step of forming the interlayer is a step of electrochemically depositing an interlayer comprising only palladium as a simple substance on the surface of the palladium alloy particle.

11. The method for producing the catalyst particle according to any one of claims 7 to 9, wherein the step of forming the interlayer is a step of selectively eluting metals other than palladium among metals exposed on at least the surface of the palladium alloy particle.

12. The method for producing the catalyst particle according to any one of claims 7 to 9, wherein the interlayer forming step comprises the steps of:

selectively eluting metals other than palladium among metals exposed on at least the surface of the palladium alloy particle;
and electrochemically depositing the interlayer comprising only palladium as the simple substance on at least a part of the surface of the palladium alloy particle, where the metals other than palladium have been selectively eluted.

13. The method for producing the catalyst particle according to any one of claims 7 to 12, wherein the palladium alloy particle is supported by a carrier.

FIG.1

FIG. 2

FIG.3

FIG.4

## INTERNATIONAL SEARCH REPORT

| International application No. |
| --- |
| PCT/JP2010/062263 |

A. CLASSIFICATION OF SUBJECT MATTER
*B01J23/89*(2006.01)i, *B01J33/00*(2006.01)i, *B01J35/08*(2006.01)i, *H01M4/88*(2006.01)i, *H01M4/90*(2006.01)i

According to International Patent Classification (IPC) or to both national classification and IPC

B. FIELDS SEARCHED

Minimum documentation searched (classification system followed by classification symbols)
B01J23/89, B01J33/00, B01J35/08, H01M4/88, H01M4/90

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
JSTPlus(JDreamII)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2008-525638 A (Brookhaven Science Associates),<br>17 July 2008 (17.07.2008),<br>paragraphs [0010] to [0012], [0042] to [0044], [0066] to [0069]; example 1<br>& US 2006/0134505 A1 & WO 2006/135396 A2<br>& KR 10-2007-0091358 A & CN 101111337 A<br>& RU 2007127811 A | 1-6<br>7-13 |
| Y | US 2007/0031722 A1 (RADOSLAV, A. et al),<br>08 February 2007 (08.02.2007),<br>abstract; examples 1, 2<br>& US 2006/0135359 A1 | 7-13 |

| ☒ Further documents are listed in the continuation of Box C. | ☐ See patent family annex. |
| --- | --- |

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>18 October, 2010 (18.10.10) | Date of mailing of the international search report<br>02 November, 2010 (02.11.10) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/062263

C (Continuation).    DOCUMENTS CONSIDERED TO BE RELEVANT

| Category* | Citation of document, with indication, where appropriate, of the relevant passages | Relevant to claim No. |
|---|---|---|
| A | SHAO, M. et al, Pt Monolayer on Porous Pd-Cu Alloys as Oxygen Reduction Electrocatalysts, J. Am. Chem. Soc., 2010.06.21, Vol.132, No.27, [online], p.9253-9255, DOI: 10.1021/ja101966a | 1-13 |
| A | SRIVASTAVA, R. et al, Efficient Oxygen Reduction Fuel Cell Electrocatalysis on Voltammetrically Dealloyed Pt-Cu-Co Nanoparticles, Angewandte Chemie International Edition, 2007.12.03, Vol.46, No.47, p.8988-8991, DOI:10.1002/anie.200703331 | 1-13 |
| A | KULP, C. et al, Electrochemical Synthesis of Core-Shell Catalysts for Electrocatalytic Applications, ChemPhysChem, 2010.06.28, Vol.11, No.13, [online], p.2854-2861, DOI:10.1002/cphc.200900881 | 1-13 |
| A | JP 2008-261045 A (Green Hydrotec, Inc.), 30 October 2008 (30.10.2008), paragraphs [0023], [0028], [0032] & US 2008/0254311 A1    & KR 10-2008-0092828 A | 1-13 |
| E,A | JP 2010-198885 A (Ishifuku Metal Industry Co., Ltd.), 09 September 2010 (09.09.2010), entire text (Family: none) | 1-13 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 200731722 B